# NEUE EUROPÄISCHE PATENTSCHRIFT

(11) **EP 1 880 869 B2**
(45) Veröffentlichungstag und Bekanntmachung des Hinweises auf die Entscheidung über den Einspruch: **13.06.2018**
(45) Hinweis auf die Patenterteilung: 03.03.2010
(21) Anmeldenummer: 07018211.8
(22) Anmeldetag: 13.01.2004
(51) Int. Cl.: B44C 1/14, B32B 15/08, B32B 17/10, B32B 27/36, B60R 13/00, B60R 13/02, B60R 13/04

(54) **Herstellungsverfahren für ein mehrlagiges Dekorband mit einer Reliefstruktur und einer Aluminiumschicht**
Method for manufacturing a laminated decorative strip having a relief structure and comprising an aluminium layer
Procédé de fabrication d'un ruban de décoration multicouches en relief comprenant une couche d'aluminium

(30) Priorität: 13.01.2003 DE 10300919; 13.01.2003 DE 20300435 U
(43) Veröffentlichungstag der Anmeldung: 23.01.2008
(62) Teilanmeldung aus: 04701588.8
(73) Patentinhaber: Samvardhana Motherson Innovative Autosystems B.V. & Co. KG, 96244 Michelau (DE)
(72) Erfinder: Reissenweber, Dirk, 96237 Ebersdorf (DE)
(74) Vertreter: Weickmann & Weickmann PartmbB

(56) Entgegenhaltungen:
- EP-A- 1 129 952
- DE-A- 3 147 043
- DE-A- 3 940 628
- DE-A- 19 924 604
- DE-A1- 28 130 636
- DE-B- 1 288 298
- DE-U- 1 800 639
- DE-U1- 20 016 842
- GB-A- 930 062
- GB-A- 1 076 033
- GB-A- 1 533 658
- GB-A- 2 360 011
- JP-A- S4 026 290
- US- - 3 565 734
- US-A- 1 856 928
- US-A- 3 136 676
- US-A- 3 246 066
- US-A- 3 780 152
- US-A- 3 980 512
- US-A- 4 220 681
- US-A- 4 231 831
- US-A- 4 253 597

## Beschreibung

Die vorliegende Erfindung betrifft ein Verfahren zur Herstellung eines mehrlagigen Dekorbandes mit reliefartiger Struktur aus Text oder graphischem Symbol, umfassend eine Oberlage aus Metall, vorzugsweise Aluminium.

Solche Dekorbänder finden beispielsweise Verwendung beim Bau von Automobilen, wo sie etwa als obere Abdeckung an Türschwellen angebracht werden können. Als Material für die Zierfläche wird häufig Aluminium verwendet, um dem Dekorband ein ansprechendes äußeres Erscheinungsbild zu verleihen. In der Aluminum-Oberfläche ist eine reliefartige Struktur ausgebildet, beispielsweise der Name oder ein Markenzeichen des Herstellers. Über den Automobilbau hinaus finden derartige Dekorbänder auch Verwendung als Typenschilder bzw. Ettiketten von technischen Gerätschaften aller Art, man denke beispielsweise an Haushaltsgeräte (Kühlschränke, Gefrierschränke, Geschirrspüler ), Sanitäranlagen (Duschgriff bzw. Duschkabine ).

Werden solche Dekorbänder ganz aus Aluminum hergestellt, so ist eine gewisse Mindestdicke des verwendeten Aluminumblechs von ungefähr 1,5 mm erforderlich, um ein ausreichend stabiles Dekorband zu erhalten, bei dem eine aufgeprägte Struktur dauerhaft in ansprechender Weise erhalten bleibt. Da die Prägetiefe der reliefartigen Struktur in der Regel nicht mehr als 0,2 mm beträgt, wird also im Vergleich zum "sichtbaren" Oberflächenbereich eine relativ große Menge von Aluminum benötigt. Dieser relativ große im Prinzip überflüssige Aluminium-Anteil stellt zum einen einen erheblichen Kostenfaktor für solche Dekorbänder dar und führt außerdem zu einem relativ hohen Gewicht der Dekorbänder. Wenn man bedenkt, dass solche als Massenartikel eingesetzten Dekorbänder naturgemäß trotz eines möglichst edlen äußeren Erscheinungsbildes kaum nennenswerte Herstellungskosten verursachen sollten, so ist der Wert von Materialeinsparungen ohne weiteres ersichtlich. Ersetzt man einen Teil des Aluminiums, der nicht sichtbar ist, durch andere Materialien, die leichter und/oder billiger sind (beispielsweise Kunststoff), so stellt sich das Problem, dass ein einfaches Aufprägen von scharfgezeichneten reliefartigen Strukturen nicht mehr gelingt. Ursache hierfür ist, dass die Verbindungsfähigkeiten der einzelnen Komponenten eines solchen Verbundwerkstücks unterschiedlich sind. Aus diesem Grund gelingt es nicht, im Prägeverfahren optisch ansprechende Resultate zu erzielen.

Eine weitere Möglichkeit der Oberflächenbearbeitung eines Werkstücks, beispielsweise eines Dekorbandes, besteht darin, die gewünschte Struktur in die Metalloberfläche einzuätzen. Nachteilig bei dieser Vorgehensweise ist jedoch, dass das Ätzen herstellungstechnisch relativ aufwändig ist, da mindestens ein weiterer Arbeitsschritt zur Beschichtung der Oberfläche mit einer Maskierungsschicht erforderlich ist. Weiterhin ist es nachteilig, dass nach dem Ätzvorgang die Aluminiumoberfläche völlig blank und vor Korrosion nicht geschützt wäre. Daher ist es zwingend erforderlich, dass nach dem Ätzvorgang ein Korrosionsschutz durch Eloxieren oder Lackieren aufgebracht wird, was wiederum erhebliche Mehrkosten verursacht. Im Falle einer Lakkierung würde man zudem die durch Reliefätzen vorher eingebrachte Mattierung zuschwemmen. Die Folge wäre ein weniger wertanmutendes Aussehen.

Die DE 31 47 043 A offenbart eine aus einem Aluminium-Kunststoff-Verbundwerkstoff hergestellte Platte, bei der als Trägermaterial eine Verbundplatte mit zwischen Aluminiumblechen festliegendem Kern dient, die an zumindest einer Außenfläche großflächig mit einer Aluminiumfolie kaschiert ist. Die Aluminiumfolie kann vor dem Aufbringen auf das Trägermaterial durch Anodisieren oder durch eine entsprechende mechanische Strukturierung mit einer Dekorfläche versehen sein.

Wie die DE 31 47 043 A offenbart, erfolgt die Anodisierung der Sichtfläche der Aluminiumfolie mit lediglich 2,4 oder 6 µm, so dass keine zu einem dauerhaften und anmutigen Erscheinungsbild beitragende, nennenswert reliefartige Struktur entsteht. Auch eine alternativ vorgeschlagene mechanische Strukturierung der Sichtfläche der Aluminiumfolie ist vorgesehen.

Ferner offenbart die US 3,980,512 A ein Verfahren zum Aufbringen von Text und Dekoration auf eine Materialbahn, insbesondere auf eine Verpackungsmaterialbahn. Hierzu wird vorgeschlagen, zuerst eine Kunststofffolie mit einer sehr dünnen Metallschicht, welche lediglich eine Dicke von nur 100-4000 Å (100 - 4000 x 10⁻¹⁰ m) aufweist, zu bedampfen. Diese Kunststofffolie wird anschließend vermittels wenigstens einer Rolle gegen eine noch heiße extrudierte Materialbahn gepresst, wobei die dünne Metallschicht in die Oberfläche der extrudierten Materialbahn eindringt und dort haften bleibt.

Aufgabe der vorliegenden Erfindung ist es daher, ein Herstellungsverfahren für ein Dekorband bereitzustellen, bei dem bei verringerter Masse des eingesetzten Metalls weiterhin eine ansprechend gestaltete reliefartige Oberflächenstruktur ausgebildet werden kann.

Zur Lösung der genannten Aufgabe sieht die vorliegende Erfindung ein Herstellungsverfahren für ein mehrlagiges Dekorband mit den Merkmalen von Anspruch 1 vor.

Erfindungsgemäß wird die Verstärkungslage an der bereits mit der reliefartigen Struktur ausgebildeten Oberlage angebracht. Da in diesem Fall die reliefartige Struktur an der Oberlage aus Metall eingeprägt wird, solange diese noch nicht mit der Verstärkungslage aus Kunststoff verbunden ist, ist das Ausbilden von exakten und scharfen Konturen mittels eines Prägeverfahrens in sehr einfacher Weise möglich. Dies wird noch dadurch begünstigt, dass bei dem erfindungsgemäßen Band die Oberlage aus Metall vergleichsweise dünn ist. Beim Prägevorgang drückt der Prägestempel das die Oberlage bildende dünne Band z.B. aus Aluminium, gegen ein komplementär geformtes Gegenstück, so dass auch komplexere reliefartige Strukturen exakt reproduziert werden können - die Verstärkungslage aus Kunststoff dagegen würde beim Prägen die Reliefbildung beeinträchtigen insbesondere im Bereich scharfer Kanten. Auch wäre zu befürchten, dass nach dem Prägen der Zusammenhalt zwischen der Verstärkungslage und der Oberlage zumindest stellenweise leidet.

Für eine möglichst gut haftende Anbringung der Verstärkungslage aus Kunststoff an der bearbeiteten Oberlage sind Verfahren geeignet, bei denen die reliefartige Struktur auf der Oberseite der Oberlage nicht mehr verändert wird. Insbesondere geeignet hierfür sind Extrusionsverfahren, wobei die Verstärkungslage aus Kunststoff in Schritt b) aufextrudiert wird.

Da das Extrusionsverfahren prinzipell ein kontinuierliches Herstellungsverfahren ist, bei dem zu jeder vorgegebenen Zeiteinheit aus einer bestimmten Menge zuzuführender Eingangswerkstoffe eine vorgegebene Menge eines Endprodukts erzeugt wird, ist es nicht ohne weiteres möglich, dieses mit einem Prägeverfahren zu kombinieren, das zumindest bei hohen Qualitätsanforderungen an das Prägebild ein diskontinuierlich arbeitendes Herstellungsverfahren ist. Im vorliegenden Fall stellt sich somit das Problem, dass beim Aufprägen der reliefartigen Struktur auf die Metalloberlage die Fortbewegung der Metalloberlage einem ständigen Wechsel aus Anhalten während des Aufdrückens des Prägestempels und Weitertransportieren unterworfen ist, während es durch die Extrusionsmaschine mit konstanter Transportgeschwindigkeit bewegt werden muss. Zur Abstimmung dieser unterschiedlichen Bewegungsarten der Oberlage kann deshalb vorgesehen sein, dass im Herstellungsablauf die Verstärkungslage an der Oberlage unmittelbar nach dem Prägen der reliefartigen Struktur angebracht wird, wobei die Oberlage nach dem Prägen und vor dem Anbringen der Verstärkungslage wenigstens eine Pufferanordnung durchläuft, innerhalb der sie sich zeitweise ansammeln kann. Beispielsweise kann dies dadurch realisiert werden, dass das die Oberlage zwischen der Prägeeinheit und der Extrusionmaschine eine schlaufenartige Anordnung bildet (z.B. einfach in einem gewissen Grad durchhängt), die sich in periodischem Wechsel vergrößert und verkleinert.

Wenn an der Oberseite der Oberlage eine weitere Kunststofflage als Schutzlage angeordnet ist, ist es darüber hinaus günstig, diese weitere Kunststofflage ebenfalls in Schritt b) auf die Oberlage aufzuextrudieren. Hierfür kann ein Doppelextruder vorgesehen sein, mit zwei Extrusionsköpfen die einander gegenüberliegend angeordnet sind und zwischen denen die Oberlage hindurch transportiert wird. Auf diese Weise kann das Anbringen sowohl der Verstärkungslage als auch der Schutzlage in einem einzigen Arbeitsgang erfolgen.

Zum Schutz der Oberlage der darin eingeprägten reliefartigen Struktur vor äußeren Einflüssen, z.B. UV-Strahlung und Korrosion, kann ein an der Oberfläche der Oberlage aufgetragener Schutzlack dienen. Bei dem erfindungsgmäßen Verfahren bietet sich die Möglichkeit, diesen Schutzlack bereits vor dem Prägen der reliefartigen Struktur an der Oberlage anzubringen, da durch den Prägevorgang die Schutzlackschicht nicht beschädigt wird. Es können bereits mit einem Schutzlack versehene Bänder z.B. aus Aluminium verwendet werden, die von Bandherstellern zu billigen Preisen kommerziell erhältlich sind.

In entsprechender Weise kann - falls gewünscht ebenfalls bereits vor dem Prägen - an der Unterseite der Oberlage ein Haftlack angebracht werden, der eine besonders feste Haftung der Verstärkungslage an der Oberlage bewirken soll. Auch solche Bänder, bzw. Bänder, die sowohl einen Schutzlack auf einer Seite als auch einen Haftlack auf der anderen Seite aufweisen, können kommerziell zu günstigen Konditionen bezogen werden. Ein Ausführungsbeispiel der Erfindung wird im folgenden anhand der beigefügten Zeichnungen im Detail beschrieben. Es zeigt:
- Figur 1: einen Längsschnitt durch ein erfindungsgemäß hergestelltes mehrlagiges Band; und
- Figur 2: eine stark vereinfachte schematische Darstellung einer Anordnung zur erfindungsgemäßen Herstellung des Bands in Querschnittsansicht.

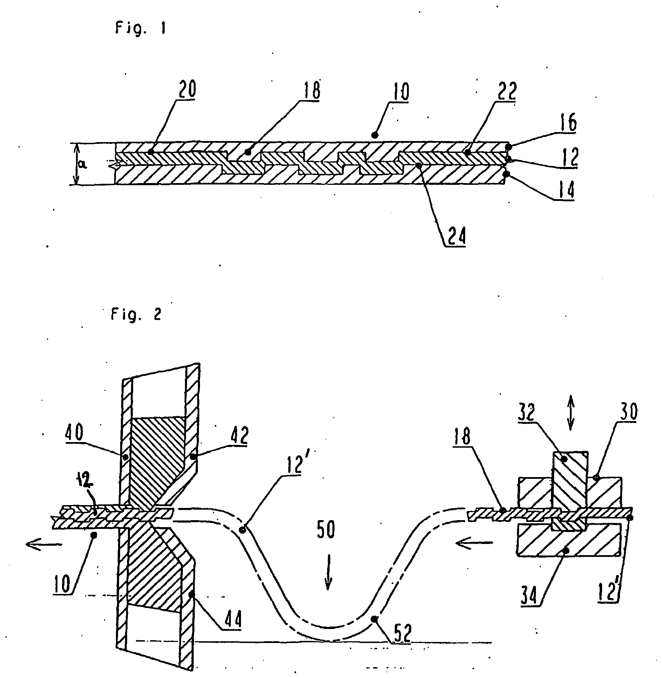

In Figur 1 ist in einer Längsschnittansicht ein Ausschnitt durch ein erfindungsgemäß hergestelltes mehrlagiges Band 10 gezeigt. Das erfindungsgemäß hergestellte Band 10 ist aus drei Lagen zusammengesetzt, nämlich einer in der Mitte angeordneten Metalllage 12 aus Aluminium, einer darunter angeordneten Verstärkungslage 14 aus Kunststoff sowie einer in Figur 1 oben angeordneten weiteren Schutzlage 16. Alle drei Lagen sind derart miteinander verbunden, dass sie aneinander anhaften, wobei die Verbindung zwischen der Aluminiumlage 12 und der Verstärkungslage 14 so fest ist, so dass die beiden Lagen 12, 14 praktisch nicht voneinander getrennt werden können. Im Gegensatz hierzu ist die obere Schutzlage 16 lediglich schwach mit der Aluminiumlage 12 verbunden, so dass sie leicht von Hand von der Aluminiumlage 12 abgezogen werden kann. Die Funktion der Schutzlage 16, die vorzugsweise ebenfalls aus Kunststoff besteht, ist primär ein Schutz der Aluminiumlage 12 vor mechanischer Beschädigung beim Herstellprozess. Sekundär ist die Schutzlage 16 ein Schutz bis zum endgültigen Anbringen des Bands 10 an einem vorgesehenen Produkt.

Weiterhin ist die Oberfläche 20 der Aluminiumlage 12 mit einer reliefartigen Struktur 18 ausgebildet, die durch Einprägen eines bestimmten Textes oder graphischen Symbols in das dünne Aluminiumblech 12, bevor dieses mit den beiden Kunststofflagen 14, 16 verbunden worden ist, entstanden ist. Die beiden Kunststofflagen 14 und 16 sind nach dem Einprägen der reliefartigen Struktur 18, beispielsweise durch Extrudieren, derart mit der Aluminiumlage 12 verbunden worden, dass sie über die gesamte Ober- bzw. Unterfläche der Aluminiumlage 12 hinweg an derselben anliegen. Dabei kann je nach Wunsch die Oberseite der Schutzlage und/oder die Unterseite der Verstärkungslage 14 glatt sein oder ebenfalls die Konturen der reliefartigen Struktur - unter Umständen in abgeschwächter Form - aufweisen.

Die Dicke a des in Figur 1 gezeigten mehrlagigen Bandes 10 beträgt insgesamt 1,2 mm, wobei die obere Schutzlage 16 aus Kunststoff eine Dicke von 0,2 mm, die Aluminiumlage 12 eine Dicke von 0,4 mm und die untere Verstärkungslage 14 aus Kunststoff eine Dikke von 0,6 mm aufweist. Die obere Kunststofflage 16 ist aus Polyvinylchlorid hergestellt und durchsichtig. Sie besitzt eine relativ geringe Steifigkeit, so dass sie eine Schutzfolie für die Aluminiumlage 12 bildet. Die untere Verstärkungslage 14 ist aus Polypropylen hergestellt und enthält Mineralfasern, die eine Ausdehnung bzw. Verformung der unteren Verstärkungslage 14 insbesondere in Längsrichtung des Bandes 10 behindern. Die Steifigkeit der unteren Verstärkungslage 14 ist deutlich höher als die der oberen Schutzlage 16, so dass die untere Verstärkungslage 14 dem Band 10 insgesamt sowie der eingeprägten reliefartigen Struktur der Aluminiumlage 12 Stabilität verleiht. Dennnoch bleibt das Band 10 derart biegsam, dass seine Oberfläche sich an gekrümmte Unterlagen anpassen kann.

In Figur 2 ist in einer Querschnittsansicht in stark vereinfachter Form eine Vorrichtung gezeigt, mittels derer das erfindungsgemäß hergestellte Band 10 hergestellt werden kann. Die Herstellungsvorrichtung enthält im Wesentlichen eine Prägeeinheit 30, der das die Aluminiumlage 12 bildende dünne Aluminiumband 12' zur Aufprägung der reliefartigen Struktur 18 zugeführt wird, sowie z.B. eine Extrusionseinheit 40, in der dem Aluminiumband 12' mit aufgeprägter Reliefstruktur 18 jeweils von unten bzw. von oben die Schutzlage 16 aufextrudiert wird. Weiterhin enthält die in Figur 2 gezeigte Herstellungsanordnung zwischen der Prägeeinheit 30 und Extrusionseinheit 40 eine Pufferanordnung 50, in deren Bereich das Aluminiumband 12' eine nach unten durchhängende Schlaufe 52 bildet.

In der Prägeeinheit 30 wird durch Anpressen eines Oberstempels 32 auf einen diesem zugeordneten komplementär geformten Unterstempel 34 dem Aluminiumband 12' die Reliefstruktur 18 aufgeprägt. Hierzu wird in einem ersten Arbeitsgang das noch ungeprägte Aluminiumband 12' in die Prägeeinheit 30 eingeführt, danach angehalten, der Oberstempel 32 gegen den Unterstempel 34 niedergedrückt, wieder freigegeben und danach das Aluminiumband 12' in Figur 2 nach links weiterbewegt, wobei gleichzeitig das so eben geprägte Relief aus dem Bereich der Stempel heraus transportiert wird und der als nächstes zu prägende Bereich des Aluminiumbandes 12' in die Stempelmatrizen zwischen Oberstempel 32 und Unterstempel 34 geschoben wird. Da das Aluminiumband 12' eine relativ geringe Dicke aufweist, ist es mit herkömmlich bekannten Verfahren ohne weiteres möglich, eine Prägestruktur mit scharf definierten Kanten zu erzeugen.

In der Extrusioneinheit 40 werden auf das nun die vorgesehene Reliefstruktur 18 tragende Aluminiumband 12' jeweils auf dessen Unterseite 24 bzw. dessen Oberseite 22 Kunststofflagen aufextrudiert. Hierzu umfasst die Extrusionseinheit 40 einen ersten Extrusionskopf 42, sowie einen zweiten Extrusionskopf 44, die einander gegenüber liegend angeordnet sind und zwischen denen das Aluminiumband 12' derart hindurch tranportiert wird, dass seine Unterseite 24 dem unteren Extrusionskopf 44 und seine Oberseite 22 dem oberen Extrusionskopf 42 zugewandt sind. Der untere Extrusionskopf 44 enthält plastifiziertes Polypropylen, dem Mineralfasern beigemischt sind. Der obere Extrusionskopf 42 enthält plastifiziertes Polyvinylchlorid zur Ausbildung der Schutzlage 16 auf der Oberseite 22 des Aluminiumbandes 12'. Das Aufbringen der beiden Lagen 16 geschieht hierbei nach bekannten Verfahrensweisen.

In der Extrusionseinheit 40 wird das Aluminiumband 12' in einer kontinuierlichen Weise zu dem endgültigen mehrlagigem Band 10 verarbeitet, d.h. das Aluminiumband 12' bewegt sich mit konstanter Geschwindigkeit durch die Extrusionseinheit 40 in Figur 2 nach links. Daher ist es die Aufgabe der Pufferanordnung 50, die beiden unterschiedlichen Bewegungsarten des Aluminiumbandes 12' in der Prägeeinheit 30 (diskontinuierliche Bewegung) und in der Extrusionseinheit 40 (Bewegung mit konstanter Geschwindigkeit) miteinander zu koordinieren, in dem sich das Aluminiumband 12' im Bereich der Pufferanordnung 50 als mehr oder weniger stark durchhängende Schlaufe 52 formen kann.

Um die Verstärkungslage 14 unlösbar mit der Unterseite des Aluminiumbandes 12' zu verbinden, ist auf die Unterseite des Aluminiumbandes 12' ein Haftlack aufgebracht. Um die Oberseite des Aluminiumbandes 12' mit dessen eingeprägter reliefartiger Struktur 18 vor Beschädigungen durch äußere Einflüsse (insbesondere UV-Strahlung und Korrosion) zu schützen, wird auf die Oberseite des Aluminiumbandes 12' ein Schutzlack aufgebracht. Die beiden oben genannten Lacke werden vor dem Prägevorgang auf das Metallband aufgebracht. Derartig lackierte Metallbänder können von Metallbandherstellern bezogen werden.

Das in der vorstehend beschriebenen Weise hergestellte mehrlagige (zumindest zwei-lagige) Band zeichnet sich durch geringe Material- und Herstellungskosten und hohe Formbeständigkeit aus, sowie durch besonders gutes Aussehen, da es mit komplexen Prägerelief versehen werden kann.

## Patentansprüche

1. Verfahren zur Herstellung eines mehrlagigen Dekorbandes mit reliefartiger Struktur aus Text oder graphischem Symbol, umfassend eine Oberlage (12) aus Metall, vorzugsweise Aluminium, wobei das Verfahren die folgenden Schritte umfasst:
a) Einführen eines dünnen Metallbands (12') zur Ausbildung der Oberlage in eine Prägeeinheit (30) und Einprägen der reliefartigen Struktur (18) in die Oberseite (22) und einer komplementären reliefartigen Struktur in die Unterseite (24) der Oberlage (12) und
b) nachfolgend Anbringen einer Verstärkungslage (14) aus Kunststoff an die komplementäre reliefartige Struktur der Oberlage (12) derart, dass die Verstärkungslage (14) an der gesamten Unterseite (24) der Oberlage (12) fest anliegt und die reliefartige Struktur der Oberseite (22) nicht mehr verändert wird.

2. Verfahren zur Herstellung eines mehrlagigen Bandes nach Anspruch 1,
**dadurch gekennzeichnet dass**
im Schritt b) der Kunststoff plastifiziert ist.

3. Verfahren nach einem der vorhergehenden Ansprüche,
**dadurch gekennzeichnet dass**
die Verstärkungslage (14) unmittelbar nach dem Prägen der reliefartigen Struktur (18) angebracht wird, wobei die Oberlage (12) nach dem Prägen und vor dem Anbringen der Verstärkungslage (14) wenigstens eine Pufferanordnung (50) durchläuft.

4. Verfahren nach Anspruch 3,
**dadurch gekennzeichnet dass**
die Oberlage (12) im Bereich der Pufferanordnung (50) schlaufenartig verläuft.

5. Verfahren nach einem der vorhergehenden Ansprüche,
**dadurch gekennzeichnet dass**
Schritt b) das Aufextrudieren der weiteren Kunststofflage (16) umfasst.

6. Verfahren nach einem der vorhergehenden Ansprüche,
**dadurch gekennzeichnet dass**
vor dem Einprägen der reliefartigen Struktur (18) ein Schutzlack an der Oberseite (22) der Oberlage (12) angebracht wird.

7. Verfahren nach einem der vorhergehenden Ansprüche,
**dadurch gekennzeichnet dass**
vor dem Einprägen der reliefartigen Struktur (18) ein Haftlack an der Unterseite (24) der Oberlage (12) angebracht wird.

## Claims

1. Method for producing a laminated decorative strip having a structure in relief consisting of text or a graphic symbol, comprising an upper layer (12) consisting of metal, preferably aluminium, said method comprising the following steps:
a) feeding a thin metal strip (12') for forming the upper layer (12) into an embossing unit (30) and embossing the structure in relief (18) into the upper side (22) and the complementarily formed structure in relief into the underside (24) of the upper layer (12), and
b) then attaching a reinforcement layer (14) made of plastic to the complementarily formed structure in relief of the upper layer (12) in such a way that the reinforcement layer (14) is fixedly attached to the entire underside (24) of the upper layer (12) and the structure in relief of the upper side (22) is not changed anymore.

2. Method for producing a laminated strip according to claim 1, **characterized in that**, in step b), the plastic is plastified.

3. Method in accordance with any of the preceding claims,
**characterized in that**
the reinforcement layer (14) is attached directly after the structure in relief (18) has been embossed, with the upper layer (12) passing through at least one buffer arrangement (50) after the embossing and prior to attaching the reinforcement layer (14).

4. Method in accordance with claim 3,
**characterized in that**
the upper layer (12) runs like a loop in the area of the buffer arrangement (50).

5. Method in accordance with one of the preceding claims,
**characterized in that**
step b) comprises the extrusion-coating of another plastic layer (16).

6. Method in accordance with one of the preceding claims,
**characterized in that**
a protective varnish is applied to the upper side (22) of the upper layer (12) prior to embossing the structure in relief (18).

7. Method in accordance with one of the preceding claims,
**characterized in that**
an adhesive varnish is applied to the underside (24) of the upper layer (12) prior to embossing the structure in relief (18).

## Revendications

1. Procédé servant à fabriquer une bande décorative multicouche avec une structure en relief composée de texte ou d'un symbole graphique, comprenant une couche supérieure (12) composée de métal, de préférence d'aluminium, dans lequel le procédé comprend les étapes qui suivent :
a) introduire une bande de métal (12') fine servant à réaliser la couche supérieure dans une unité d'estampage (30) et estamper la structure (18) en relief dans le côté supérieur (22) et une structure en relief complémentaire dans le côté inférieur (24) de la couche supérieure (12), et
b) placer par la suite une couche de renforcement (14) composée de matière plastique sur la structure en relief complémentaire de la couche supérieure (12) de telle manière que la couche de renforcement (14) repose de manière fixe sur l'ensemble du côté inférieur (24) de la couche supérieure (12) et la structure en relief du côté supérieur (22) ne soit plus modifiée.

2. Procédé servant à fabriquer une bande multicouche selon la revendication 1,
**caractérisé en ce que**
la matière plastique est plastifiée lors de l'étape b) .

3. Procédé selon l'une quelconque des revendications précédentes,
**caractérisé en ce que**
la couche de renforcement (14) est placée directement après l'estampage de la structure (18) en relief, la couche supérieure (12) traversant au moins un ensemble formant tampon (50) après l'estampage et avant le placement de la couche de renforcement (14).

4. Procédé selon la revendication 3,
**caractérisé en ce que**
la couche supérieure (12) s'étend à la manière d'une boucle dans la zone de l'ensemble formant tampon (50).

5. Procédé selon l'une quelconque des revendications précédentes,
**caractérisé en ce que**
l'étape b) comprend l'application par extrusion de l'autre couche de matière plastique (16).

6. Procédé selon l'une quelconque des revendications précédentes,
**caractérisé en ce que**
un vernis protecteur est placé sur le côté supérieur (22) de la couche supérieure (12) avant l'estampage de la structure (18) en relief.

7. Procédé selon l'une quelconque des revendications précédentes,
**caractérisé en ce que**
un vernis adhésif est placé sur le côté inférieur (24) de la couche supérieure (12) avant l'estampage de la structure (18) en relief.
